# EUROPEAN PATENT APPLICATION

(11) **EP 2 759 730 A1**
(43) Date of publication of application: **30.07.2014**
(21) Application number: 14151788.8
(22) Date of filing: 20.01.2014
(51) Int. Cl.: F16D 1/08, F16D 9/06

(54) **Torque limiter**

(30) Priority: 28.01.2013 JP 2013013180
(71) Applicant: JTEKT CORPORATION, Osaka-shi Osaka 542-8502 (JP)
(72) Inventor: Houjo, Yuki, Osaka-shi, Osaka 542-8502 (JP)
(74) Representative: Winter, Brandl, Fürniss, Hübner, Röss, Kaiser, Polte - Partnerschaft

(57) **Abstract**

Each shear valve (6) has a head (37) having a generally T-shape in a section taken along the radial direction of a shaft member (2) and projected from a tubular member (1) when the shear valve is fixed in a shear valve fitting hole (30). The shaft member has at least one generally T-shaped groove (37) that has a shape corresponding to the shape of the head in the section and that accommodates the head during torque transmission.

## Description

### BACKGROUND OF THE INVENTION

### 1. Field of the Invention

The invention relates to a torque limiter.

### 2. Description of Related Art

Japanese Patent Application Publication No. 2009-293680 describes a conventional torque limiter. In the torque limiter, an inner peripheral face of a tubular member is fitted onto an outer peripheral face of a shaft member, and pressure oil is supplied into a hydraulic pressure expansion chamber of the tubular member so that the diameter of the inner peripheral face of the tubular member is decreased by the pressure oil in the hydraulic pressure expansion chamber. By pressing the inner peripheral face of the tubular member against the outer peripheral face of the shaft member, the shaft member and the tubular member are frictionally coupled to each other so that torque is transmitted between the tubular member and the shaft member. Further, the pressure oil in the hydraulic pressure expansion chamber is sealed by shear valves, and an engagement member engaged with an end portion of each shear valve is fixed to the shaft member.

If a load equal to or higher than a prescribed value is applied to the tubular member or the shaft member, the inner peripheral face of the tubular member slips with respect to the outer peripheral face of the shaft member, and as a result, the position of the shaft member relative to the tubular member is changed in the circumferential direction around the axis. In such a case, a pin provided at the distal end of each shear valve is cut off by the engagement member so that the pressure oil from the hydraulic pressure expansion chamber is discharged to the outside. Thus, the frictional coupling between the shaft member and the tubular member is cancelled to interrupt transmission of the torque.

The conventional torque limiter has a scattering prevention cover arranged radially outward of the shear valves. With this configuration, if a load equal to or higher than a prescribed value is applied to the shaft member or the tubular member, the pins of the shear valves, which are broken due to the load, are prevented from scattering far.

However, in the conventional torque limiter, the heads of the shear valves, which are cut off upon cancellation of torque transmission, move around in the inside of the scattering prevention cover. Therefore, the heads of the shear valves may be scattered or become lost, and it may take a long time to restore the torque limiter. Further, the torque limiter may be scratched because the heads cut off from the shear valves move around in the inside of the scattering prevention cover.

### SUMMARY OF THE INVENTION

One object of the invention is to provide a torque limiter configured such that heads cut off from shear valves are restrained from moving around, the torque limiter is restored quickly, and the torque limiter is less likely to be scratched.

An aspect of the invention relates to a torque limiter including: a shaft member; a tubular member rotatably fitted onto the shaft member; and at least one shear valve. One member out of the tubular member and the shaft member has: a fluid pressure expansion chamber for pressing a peripheral face of the one member against a peripheral face of the other member out of the tubular member and the shaft member; and at least one shear valve fitting hole communicated with the fluid pressure expansion chamber. The number of the at least one shear valve fitting hole corresponds to the number of the at least one shear valve. Each of the at least one shear valve is fixed in the corresponding shear valve fitting hole, and has a head having a generally T-shape in a section taken along a radial direction of the shaft member and projected from the one member. The other member has a cover tube having at least one generally T-shaped groove. Each of the at least one T-shaped groove has a shape corresponding to the shape of the head in the section, and accommodates the head during torque transmission.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a sectional view schematically illustrating a torque limiter according to a first embodiment of the invention, taken along the axial direction of the torque limiter;
FIG. 2 is an enlarged sectional view illustrating a shear valve and its surroundings in FIG. 1;
FIG. 3 is an enlarged sectional view illustrating a shear valve fitting hole and its surroundings in a section taken along the line A-A in the radial direction in FIG. 1; and FIG. 4 is a perspective view illustrating a T-shaped grooved cover portion.

### DETAILED DESCRIPTION OF EMBODIMENTS

Hereinafter, example embodiments of the invention will be described in detail with reference to the accompanying drawings.

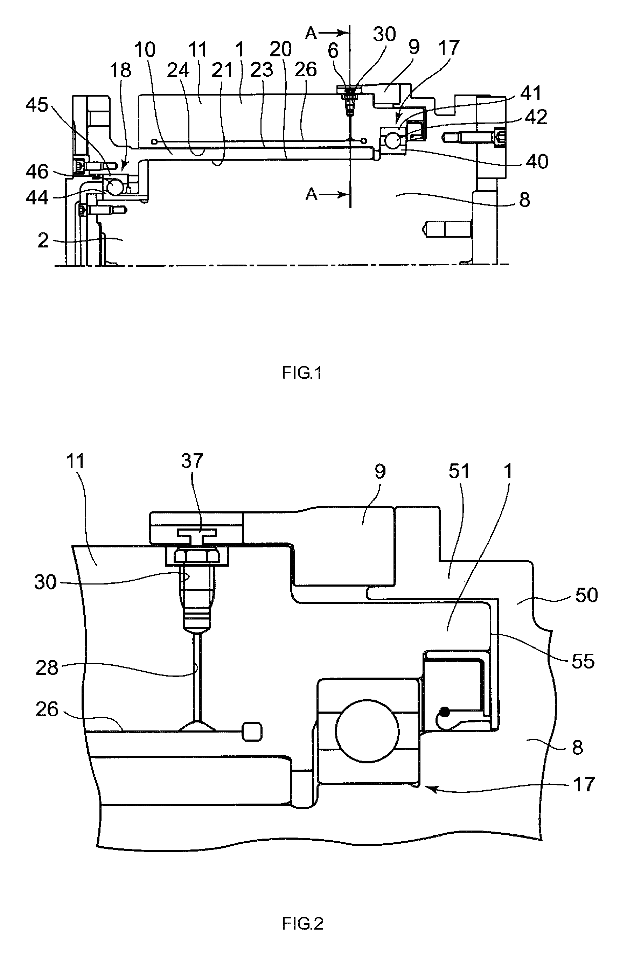

FIG. 1 is a sectional view schematically illustrating a torque limiter according to a first embodiment of the invention, taken along the axial direction of the torque limiter.

The torque limiter includes a tubular member 1, which may function as one of two members, a shaft member 2, which may function as the other of the two members, four shear valves 6, a ball bearing 17, and a ball bearing 18.

The tubular member 1 includes a first tubular member 10 and a second tubular member 11. The first tubular member 10 has an inner peripheral face 21 that is generally cylindrical and that is in contact with an outer peripheral face 20 of the shaft member 2. Lubrication oil for preventing seizure is present between the outer peripheral face 20 of the shaft member 2 and the inner peripheral face 21 of the first tubular member 10. The second tubular member 11 has an inner peripheral face 24 that is generally cylindrical and that is in contact with a generally cylindrical outer peripheral face 23 of the first tubular member 10. The second tubular member 11 has four shear valve fitting holes 30 and an annular hydraulic pressure expansion chamber 26, which may function as a fluid pressure expansion chamber.

The hydraulic pressure expansion chamber 26 extends generally in the axial direction of the shaft member 2 over a prescribed axial length along the inner peripheral face 24 of the second tubular member 11. The four shear valve fitting holes 30 are located in an outer peripheral face of the second tubular member 11 at equal intervals in the circumferential direction. The number of the shear valves 6 is equal to that of the shear valve fitting holes 30. The shear valves 6 are fixedly screwed into the shear valve fitting holes 30.

FIG. 2 is an enlarged sectional view illustrating the shear valve 6 and its surroundings in FIG. 1.

As illustrated in FIG. 2, the second tubular member 11 has oil drain holes 28. One end of each oil drain hole 28, which is a radially inner end of each drain hole 28, is communicated with the hydraulic pressure expansion chamber 26. The other end of each oil drain hole 28, which is a radially outer end of each oil drain hole 28, is open into a corresponding one of the shear valve fitting holes 30.

Each shear valve 6 has a tube (passage) formed inside the shear valve 6. The tube extends generally in the radial direction of the shaft member 2 when the shear valve 6 is fixed in the shear valve fitting hole 30. As illustrated in FIG. 2, the radially outer end portion of each shear valve 6 constitutes a T-shaped head 37 in a cross section taken along the axial direction. The head 37 projects radially outward from the outer peripheral face of the second tubular member 11 when the shear valve 6 is fitted in the shear valve fitting hole 30.

When the shear valve 6 is fixed in the shear valve fitting hole 30, the radially inner end portion of the tube is communicated with the other end of the oil drain hole 28 and is therefore communicated with axial one end portion of the hydraulic pressure expansion chamber 26. Further, when the shear valve 6 is fixed in the shear valve fitting hole 30, the radially outer end portion of the tube extends up to the head 37, and projects radially outward from the outer peripheral face of the second tubular member 11. The radially outer end portion of the tube is sealed.

As illustrated in FIG. 1 and FIG. 2, a cover tube 9 is connected to a body portion 8 of the shaft member 2, which has the generally cylindrical outer peripheral face 20. The cover tube 9 is an annular member. The cover tube 9 is secured to the body portion 8 by fastening members such as bolts. The cover tube 9 has a portion that is located radially outward of the outer peripheral face of the second tubular member 11.

As illustrated in FIG. 2, the body portion 8 has a radially extending portion 50 and axially extending portions 51, 52. The radially extending portion 50 is opposed, in the axial direction, to one axial side end face 55 of the tubular member 1, and extends in the radial direction. The axially extending portion 51 is continuous to the radially extending portion 50. The axially extending portion 51 extends in the axial direction along the outer peripheral face of the tubular member 1.

Referring again to FIG. 1, the ball bearing 17 has an inner ring 40, an outer ring 41 and a plurality of balls 42. The inner ring 40 is fixedly fitted to an outer peripheral face of the shaft member 2. The outer ring 41 is fixedly fitted to an inner peripheral face of the second tubular member 11. The balls 42 are arranged between a raceway surface of the inner ring 40 and a raceway surface of the outer ring 41. The ball bearing 18 has an inner ring 44, an outer ring 45 and a plurality of balls 46. The inner ring 44 is fixedly fitted to an outer peripheral face of the shaft member 2. The outer ring 45 is fixedly fitted to an inner peripheral face of the first tubular member 10. The balls 46 are arranged between a raceway surface of the inner ring 44 and a raceway surface of the outer ring 45. The ball bearing 17 and the ball bearing 18 support the shaft member 2 such that the shaft member 2 is rotatable relative to the tubular member 1.

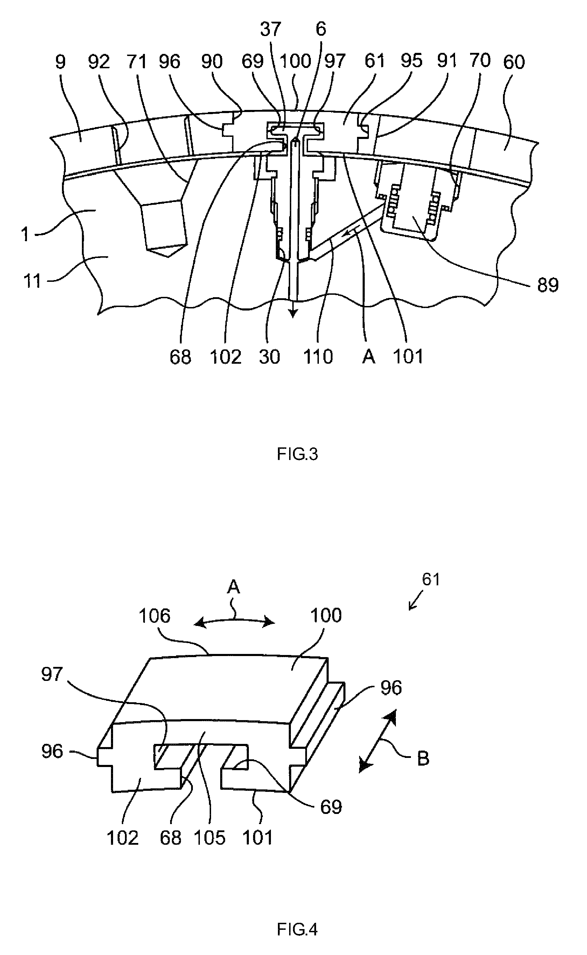

FIG. 3 is an enlarged sectional view illustrating the shear valve fitting hole 30 and its surroundings in a section taken along the line A-A in the radial direction in FIG. 1.

As illustrated in FIG. 2, the cover tube 9 is overlapped with the shear valves 6 in the axial direction. The cover tube 9 extends in the circumferential direction of the tubular member 1. The cover tube 9 has an annular body portion 60 and four T-shaped grooved cover portions 61. Each of the T-shaped grooved cover portions 61 constitutes a cover portion with a head accommodation groove. The body portion 60 has four fitting recesses 90. Each of the fitting recesses 90 is opened at only one axial side. The radially outer side of each fitting recess 90 is opened in the radial direction, and the radially inner side of each fitting recess 90 is opened in the radial direction. The fitting recess 90 has two generally rectangular recess portions 95 that are formed respectively in opposite side faces of the recess 90. Each of the recess portions 95 extends over the entire axial region of the fitting recess 90, and extends in the axial direction. The shape of each fitting recess 90 in a section taken along the radial direction is the same at any positions in the axial direction.

FIG. 4 is a perspective view illustrating the T-shaped grooved cover portion 61.

As illustrated in FIG. 4, each T-shaped grooved cover portion 61 has an outer face 100 and inner faces 101, 102. The outer face 100 is a part of a cylindrical outer peripheral face. The inner faces 101, 102 are parts of a single cylindrical inner peripheral face. The T-shaped grooved cover portion 61 has generally rectangular protrusions 96 respectively formed on its opposite side faces. Each of the protrusions 96 projects in the circumferential direction of the outer face 100 indicated by an arrow A in FIG. 4. The protrusions 96 extend from one axial end face 105 to the other axial end face 106 of the T-shaped grooved cover portion 61 in the axial direction of the T-shaped grooved cover portion 61 as indicated by an arrow B in FIG. 4.

As illustrated in FIG. 3, the sectional shape of each side face of the T-shaped grooved cover portion 61, taken along the radial direction, corresponds to that of each side face of the fitting recess 90. The T-shaped grooved cover portion 61 is fitted in the fitting recess 90. The protrusions 96 of the T-shaped grooved cover portion 61 are fitted in the recess portions 95 of the fitting recess 90. Each T-shaped grooved cover portion 61 is fitted to the body portion 60 so as to be removable from the body portion 60 in the axial direction.

As illustrated in FIG. 3 and FIG. 4, each T-shaped grooved cover portion 61 has a T-shaped groove 97 at its widthwise center portion, as viewed in a section taken along the radial direction of the tubular member 1. The T-shaped groove 97 has a radially extending portion 68 and a circumferentially extending portion 69. The radially extending portion 68 is located at the circumferential center portion of the T-shaped grooved cover portion 61, and extends in the radial direction. The radially extending portion 68 is opened only inward in the radial direction.

The circumferentially extending portion 69 extends in the circumferential direction. The circumferential ends of the circumferentially extending portion 69 are not opened in the circumferential direction. The circumferentially extending portion 69 has, at its circumferential ends, end faces that extend generally in the radial direction. The circumferentially extending portion 69 is continuous, at its substantially center portion in the circumferential direction, to the radially outer end portion of the radially extending portion 68.

As illustrated in FIG. 3, the radially outer face 100 of the T-shaped grooved cover portion 61 constitutes a part of an outer peripheral face of the cover tube 9 when the T-shaped grooved cover portion 61 is fitted in the body portion 60. Further, the radially inner faces 101, 102 of the T-shaped grooved cover portion 61 constitute parts of an inner peripheral face of the cover tube 9.

As illustrated in FIG. 3, the body portion 60 has a coupler insertion hole 91, and a pin insertion hole 92. The coupler insertion hole 91 is apart from the pin insertion hole 92 in the circumferential direction. Further, as illustrated in FIG. 3, the second tubular member 11 has oil supply port 70 and a positioning hole 71.

As illustrated in FIG. 3, a pin is inserted in both the positioning hole 71 and the pin insertion hole 92 when the phase of the positioning hole 71 and the phase of the pin insertion hole 92 coincide with each other in the circumferential direction. Thus, during assembly of the torque limiter, the cover tube 9 is prevented from moving relative to the second tubular member 11 in the circumferential direction.

When the pin is inserted in both the positioning hole 71 and the pin insertion hole 92, the phase of the coupler insertion hole 91 and the phase of the oil supply port 70 coincide with each other in the circumferential direction, and phase of the shear valve fitting hole 30 and the phase of the fitting recess 90 of the body portion 60 coincide with each other in the circumferential direction.

The torque limiter is assembled in, for example, the following process. First, when the pin is inserted in both the positioning hole 71 and the pin insertion hole 92, each of the shear valve 6 is screwed into and fitted in a corresponding one of the shear valve fitting holes 30 while being somewhat loosened. Then, a coupler 89 is inserted in the oil supply port 70 through the coupler insertion hole 91, and then, a prescribed amount of oil is supplied in a direction indicated by an arrow A in FIG. 3 through an oil charge passage 110 and is sealed in the hydraulic pressure expansion chamber 26. Thus, the tubular member 1 and the shaft member 2 are frictionally engaged with each other.

Then, each shear valve 6 is fastened, by screwing, into the shear valve fitting hole 30 so as to be reliably fixed in the shear valve fitting hole 30. After that, the T-shaped grooved cover portions 61 are moved relative to the body portion 60 in the axial direction, and are then fitted to the body portion 60. Finally, the pin is removed from the positioning hole 71 and the pin insertion hole 92. Thus, the assembly of the torque limier is completed.

FIG. 3 illustrates the state where the assembly of the torque limiter is completed after the pin is removed from the positioning hole 71 and the pin insertion hole 92. As illustrated in FIG. 3, in a section of the tubular member 1 taken along the radial direction (this section coincides with a section of the shaft member 2 taken along the radial direction), the T-shaped head 37 of the shear valve 6 has a shape that corresponds to the T-shaped groove 97. When the assembly of the torque limiter is completed, the T-shaped head 37 of the shear valve 6 is accommodated in the T-shaped groove 97 of the T-shaped grooved cover portion 61 with a clearance left between the head 37 and the walls of the T-shaped groove 97.

As illustrated in FIG. 3, a circumferentially extending portion of the distal end of the T-shaped head 37 of the shear valve 6 has a circumferential length that is longer than that of the radially extending portion 68 of the T-shaped groove 97. Thus, when the T-shaped head 37 is cut off, the cut T-shaped head 37 is caught within the T-shaped groove 97.

In the above-described configuration, if a load lower than a prescribed value (load within a range in which torque is transmitted) is applied to shaft member 2 or the tubular member 1, the diameter of the inner peripheral face 21 of the tubular member 1 is decreased by the oil for hydraulic pressure expansion, which is introduced into the hydraulic pressure expansion chamber 26 through the coupler 89, to press the inner peripheral face 21 of the first tubular member 10 against the outer peripheral face 20 of the shaft member 2. Thus, the shaft member 2 and the tubular member 1 are frictionally engaged with each other, so that torque is transmitted between the shaft member 2 and the tubular member 1.

If a load equal to or higher than the prescribed value (load higher than the upper limit of the range in which torque is transmitted) is applied to the tubular member 1 or the shaft member 2, the outer peripheral face 20 of the shaft member 2 slips with respect to the inner peripheral face 21 of the first tubular member 10, and as a result, the position of the shaft member 2 relative to the tubular member 1 is changed in the circumferential direction around the axis. In such a case, the head 37 of each shear valve 6 is cut off by the cover tube 9 so that the oil for hydraulic pressure expansion, which is in the hydraulic pressure expansion chamber 26, is discharged to the outside through the tube of each shear valve 6, of which the other end is cut off. Thus, the pressing force of the inner peripheral face 21 of the first tubular member 10 against the outer peripheral face 20 of the shaft member 2 is eliminated, so that the frictional coupling between the shaft member 2 and the tubular member 1 is cancelled to interrupt torque transmission. Thus, when an excessively high load is applied to the shaft member 2 or the tubular member 1, torque transmission is interrupted to protect an expensive machine coupled to a torque limiter unit.

According to the embodiment described above, each shear valve 6 has the head 37 having a T-shaped shape in a section taken along the radial direction of the shaft member 2. Thus, the center of gravity of the head 37 is located closer to the distal end of the head 37, and therefore the head 37 is easily cut off. Further, the T-shaped groove 97 of the cover tube 9, in which the head 37 is accommodated, has a T-shape that corresponds to the shape of the head 37 in a section taken along the radial direction. Thus, the T-shaped portion of the head 37 is caught within the T-shaped groove 97, which makes it possible to restrain the head 37 from being broken into small pieces. Further, the T-shaped groove 97 of the cover tube 9, in which the head 37 is accommodated, has a T-shape that corresponds to the shape of the head 37 in a section taken along the axial direction. Thus, the space in which the cut head 37 is allowed to move is limited to a considerably narrow space, which makes it possible to restrain the heads 37 from scattering or being lost. Thus, replacement of the shear valves 6 is quickly carried out, and accordingly, the torque limiter is restored quickly.

According to the embodiment described above, the T-shaped portion of the head 37 is caught within the T-shaped groove 97, and the space in which the cut head 37 is allowed to move is limited to a considerably narrow space, which makes it possible to restrain the cut head 37 from moving around. Thus, it is also possible to restrain the torque limiter from being scratched.

According to the embodiment described above, each of the T-shaped grooves 97 of the cover tube 9, in which the head 37 is accommodated, has a generally T-shape corresponding to the shape of the head 37 in a section taken along the axial direction. Thus, when the tubular member 1 is rotated relative to the shaft member 2, the head 37 and the cover tube 9 are brought into contact with each other more quickly, and therefore the head 37 is cut off more quickly. Thus, it is possible to enhance the responsiveness of the torque limiter.

According to the embodiment described above, the cover tube 9 need not be moved entirely in order to replace the shear valves 6. Specifically, after removal of the T-shaped grooved cover portions 61 from the body portion 60, the shear valves 6 are replaced with new ones, and the cut heads 37 caught in the T-shaped grooved cover portions 61 are removed. Finally, just by fitting the T-shaped grooved cover portions 61 to the body portion 60 again, the torque limiter is restored. Thus, the torque limiter is restored more quickly.

The tubular member 1 of the torque limiter according to the embodiment described above is formed of the first tubular member 10 and the second tubular member 11. The first tubular member 10 has the inner peripheral face 21 that is in contact with the outer peripheral face 20 of the shaft member 2. The second tubular member 11 has the hydraulic pressure expansion chamber 26 in which the oil for hydraulic pressure expansion is sealed. However, according to the invention, the tubular member 1 may be a single-piece tubular member having an inner peripheral face and a fluid pressure expansion chamber. The inner peripheral face is in contact with the outer peripheral face of the shaft member. Fluid for fluid pressure expansion is sealed in the fluid pressure expansion chamber.

In the torque limiter according to the embodiment described above, the lubrication oil that is placed between the outer peripheral face 20 of the shaft member 2 and the inner peripheral face 21 of the tubular member 1 may be traction oil or lubrication oil other than traction oil, such as paraffinic oil (turbine oil) or hindered ester.

In the torque limiter according to the embodiment described above, the fluid pressure expansion chamber is the annular hydraulic pressure expansion chamber 26, and the fluid sealed in the fluid pressure expansion chamber is the oil. However, in the invention, the fluid sealed in the fluid pressure expansion chamber may be any kind of liquid other than the oil, and the fluid pressure expansion chamber may have any shape other than the annular shape.

In the torque limiter according to the embodiment described above, the four shear valves 6 are arranged at equal intervals in the circumferential direction. However, in the invention, the number of shear valves of the torque limiter may be any number as long as the number is equal to or larger than one. When the torque limiter has a plurality of shear valves, the shear valves may arranged at either equal intervals or unequal intervals in the circumferential direction.

In the torque limiter according to the embodiment described above, the head of each shear valve 6 has a generally T-shape in a section of the shear valve 6 taken along the axial direction. However, in the invention, the head of each shear valve may have a rod-like shape. Further, the head of each shear valve may have any shape. In this case, it is preferable that the cover tube have head accommodation grooves each having a shape that corresponds to the shape of the head.

In the torque limiter according to the embodiment described above, the cover tube 9 has an annular shape. However, in the invention, the cover tube may have any shape other than an annular shape. In the torque limiter according to the embodiment described above, the cover tube 9 has the body portion 60 and the T-shaped grooved cover portions 61 the number of which is equal to the number of the shear valve fitting holes 30. However, in the invention, the cover tube may be a non-splitable single-piece member having either an annular shape or a non-annular shape. In the invention, the number of the cover portions with head accommodation groove may be smaller than the number of the shear valve fitting holes 30. At least one non-splitable cover portion with head accommodation groove may have a plurality of head accommodation grooves that are located at intervals.

In the torque limiter according to the embodiment described above, by fitting the protrusions 96 of the T-shaped grooved cover portions 61 in the recess portions 95 of the fitting recesses 90, the T-shaped grooved cover portions 61 are reliably engaged with the fitting recesses 90 in the circumferential direction. However, in the invention, recess portions formed in the cover portions with head accommodation groove may be fitted to protrusions formed at the fitting recesses so that the cover portions with head accommodation groove are reliably engaged with the fitting recesses in the circumferential direction. In the invention, the cover portions with head accommodation groove may be spline-fitted, serration-fitted or key-fitted to the fitting recesses so that the cover portions with head accommodation groove are reliably engaged with the fitting recesses in the circumferential direction. Further, in the invention, any kind of engagement method may be employed to reliably engage the cover portions with head accommodation groove with the fitting recesses in the circumferential direction.

In the torque limiter according to the embodiment described above, the hydraulic pressure expansion chamber 26 and the shear valve fitting holes 30 are formed in the tubular member 1, the shear valve fitting holes 30 are opened radially outward, and the tubular member 1 constitutes one of two members while the shaft member constitutes the other of the two members. However, in the invention, the tubular member may constitute the other of the two members while the shaft member may constitute the one of the two members, and the hydraulic pressure expansion chamber 26 and the shear valve fitting holes 30 may be formed in the shaft member. Note that, in this case, for example, each of the shear valve fitting holes 30 may be formed so as to be axially extended and to be opened at an axial end face, and the cover tube may have a portion that is connected to the tubular member and that is radially extended along an axial end face of the shaft member.

In the torque limiter in the invention, marks may be formed, by marking or carving, in both the cover tube and the tubular member (the second tubular member if the tubular member is not a single-piece member) that are two members rotated relative to each other, and the members are both positioned with the use of the marking or the carving.

In the torque limiter in the invention, when the cover tube is constituted of the body portion and the cover portion with head accommodation groove and one of the two members is a tubular member, it is preferable that the torque limiter have a relative movement prevention portion that prevents the cover portion with head accommodation groove from moving relative to the cover tube in the axial direction. The relative movement prevention portion may be, for example, an engagement portion that is pivotably attached to a portion of the body portion, which is adjacent to the fitting recess in the circumferential direction. The cover portion with head accommodation groove may be prevented from moving relative to the cover tube in the axial direction in the following manner. After the cover portion with head accommodation groove is fitted in the fitting recess in the body portion, the engagement portion is pivoted so as to be axially overlapped with the cover portion with head accommodation groove. It goes without saying that the relative movement prevention portion may be any well-known axial movement prevention means having a configuration other than the configuration as stated above.

According to the invention, it is possible to provide a torque limiter configured such that heads cut off from shear valves are restrained from moving around, the torque limiter is restored quickly, and the torque limiter is less likely to be scratched.

## Claims

1. A torque limiter comprising:
a shaft member;
a tubular member rotatably fitted onto the shaft member; and
at least one shear valve, **characterized in that**
one member out of the tubular member and the shaft member has
a fluid pressure expansion chamber for pressing a peripheral face of the one member against a peripheral face of the other member out of the tubular member and the shaft member, and
at least one shear valve fitting hole communicated with the fluid pressure expansion chamber, the number of the at least one shear valve fitting hole corresponding to the number of the at least one shear valve,
each of the at least one shear valve is fixed in the corresponding shear valve fitting hole, and has a head having a generally T-shape in a section taken along a radial direction of the shaft member and projected from the one member,
the other member has a cover tube having at least one generally T-shaped groove, and
each of the at least one T-shaped groove has a shape corresponding to the shape of the head in the section, and accommodates the head during torque transmission.

2. The torque limiter according to claim 1, wherein:
the cover tube has a body portion, and at least one T-shaped grooved cover portion detachably fitted to the body portion and having the at least one T-shaped groove; and
the number of the T-shaped grooves formed in each of the at least one T-shaped grooved cover portion is one or more.

3. A torque limiter comprising:
a shaft member;
a tubular member rotatably fitted onto the shaft member; and
at least one shear valve, **characterized in that**
one member out of the tubular member and the shaft member has
a fluid pressure expansion chamber for pressing a peripheral face of the one member against a peripheral face of the other member out of the tubular member and the shaft member, and
at least one shear valve fitting hole communicated with the fluid pressure expansion chamber, the number of the at least one shear valve fitting hole corresponding to the number of the at least one shear valve,
each of the at least one shear valve is fixed in the corresponding shear valve fitting hole, and has a head projected from the one member,
the other member has a cover tube having at least one head cover accommodation groove that accommodates the head during torque transmission,
the cover tube has a body portion and at least one cover portion with head accommodation groove, detachably fitted to the body portion, and
the number of the head accommodation grooves formed in each of the at least one cover portion with head accommodation groove is one or more.
